# EUROPEAN PATENT SPECIFICATION

(11) **EP 3 679 781 B1**
(45) Date of publication and mention of the grant of the patent: **30.06.2021**
(21) Application number: 18915791.0
(22) Date of filing: 30.11.2018
(51) Int. Cl.: A01D 34/90, A45F 3/14

(54) **SUPPORT STRUCTURE FOR WORK MACHINE PAD**
ARBEITSMASCHINENPADTRAGSTRUKTUR
STRUCTURE DE SUPPORT POUR UN PATIN DE MACHINE DE TRAVAIL

(43) Date of publication of application: 15.07.2020
(73) Proprietor: Honda Motor Co., Ltd., Tokyo 107-8556 (JP)
(72) Inventor: HASEGAWA, Tetsuya, Wako-shi, Saitama 351-0193 (JP); YAMAMOTO, Takahiro, Wako-shi, Saitama 351-0193 (JP)
(74) Representative: Kiwit, Benedikt
(86) International application number: PCT/JP2018/044243
(87) International publication number: WO 2020/110303

(56) References cited:
- DE-A1-102007 048 103
- JP-A- 2005 143 453
- JP-A- 2005 143 453
- JP-A- 2017 012 136
- JP-B2- 2 889 555
- JP-B2- 5 788 768
- SE-B- 373 272
- US-A- 5 954 249
- US-B2- 7 163 132

## Description

### TECHNICAL FIELD

The present invention relates to a working machine support belt including a working machine pad supporting structure.

### BACKGROUND ART

As a working machine support belt for supporting a working machine, such as a mowing machine, with an upper body of a user, there is known a technology including: a back plate; a shoulder belt fixed to the back plate and having a free front end portion; a side belt which extends forward through the left and right armpits from the back plate and of which the front end portion almost ends in a lower range of the chest of the user; a working machine pad on which working machinery abuts; and a pelvis belt provided below the side belt, in which a front end portion of the working machine pad is connected to the side belt via a support band, and a rear end portion of the working machine pad is connected to the pelvis belt via the support band (JP H10 98 930 A).

The working machine support belt of JP H10 98 930 A is provided with one length adjusting mechanism between the front end portion of the working machine pad and the side belt, and the position of the working machine pad can be adjusted by the length adjusting mechanism.

### SUMMARY OF THE INVENTION

### PROBLEMS TO BE SOLVED BY THE INVENTION

However, the working machine support belt of JP H10 98 930 A has room for improvement in adjusting the position of the working machine pad in accordance with the physique of a user or the size of the working machine.

The present invention provides a working machine pad supporting structure that can freely adjust the position of the working machine pad.

### MEANS FOR SOLVING THE PROBLEMS

According to the present invention, there is provided a working machine support belt including a working machine pad supporting structure, including: a front support band that supports a front portion of the working machine pad; and a rear support band that supports a rear portion of the working machine pad, in which the front support band is provided with a front length adjusting mechanism, and in which the rear support band is provided with a rear length adjusting mechanism. Further, the working machine support belt includes a waist belt, in which the rear support band is directly or indirectly connected to a right rear portion of the waist belt, in which a left locking portion is directly or indirectly connected to a left end portion of the waist belt, in which a first length adjusting mechanism is directly or indirectly provided in a right end portion of the waist belt, in which a right locking portion engaged with the left locking portion is connected to the front support band via the front length adjusting mechanism, in which, in the front support band, a first end portion positioned on one side with respect to the front length adjusting mechanism is connected to the working machine pad, and a second end portion positioned on the other side with respect to the front length adjusting mechanism is connected to the first length adjusting mechanism, and in which, in the rear support band, a first end portion is connected to the working machine pad, and a second end portion positioned to be opposite to the first end portion is connected to the right end portion of the waist belt via the rear length adjusting mechanism.

### ADVANTAGEOUS EFFECTS OF THE INVENTION

According to the structure of the present invention, by changing a distance between the front length adjusting mechanism and the working machine pad in the front support band, and a distance between the rear length adjusting mechanism and the working machine pad in the rear support band, the position of the working machine pad can be freely adjusted in the front-rear and left-right directions. Further, by changing the distance between the first length adjusting mechanism and the front length adjusting mechanism in the front support band, the position around the waist of the working machine pad can be adjusted.

### BRIEF DESCRIPTION OF THE DRAWINGS

Fig. 1 is a perspective view illustrating a wearing state of a working machine support belt that employs a working machine pad supporting structure according to an embodiment of the present invention.
Fig. 2 is a front view illustrating a wearing state of the working machine support belt that employs the working machine pad supporting structure according to the embodiment of the present invention.
Fig. 3 is a rear view illustrating the working machine support belt that employs the working machine pad supporting structure according to the embodiment of the present invention.
Fig. 4 is a view illustrating the working machine pad, a front support band, and a rear support band in the working machine support belt illustrated in Fig. 3.
Fig. 5 is a sectional view taken along line A-A of Fig. 4.
Fig. 6 is a back surface view of the working machine pad illustrated in Fig. 4.

### MODES FOR CARRYING OUT THE INVENTION

Hereinafter, an embodiment of the present invention will be described with reference to the attached drawings.

### [Entire Configuration of Working Machine Support Belt]

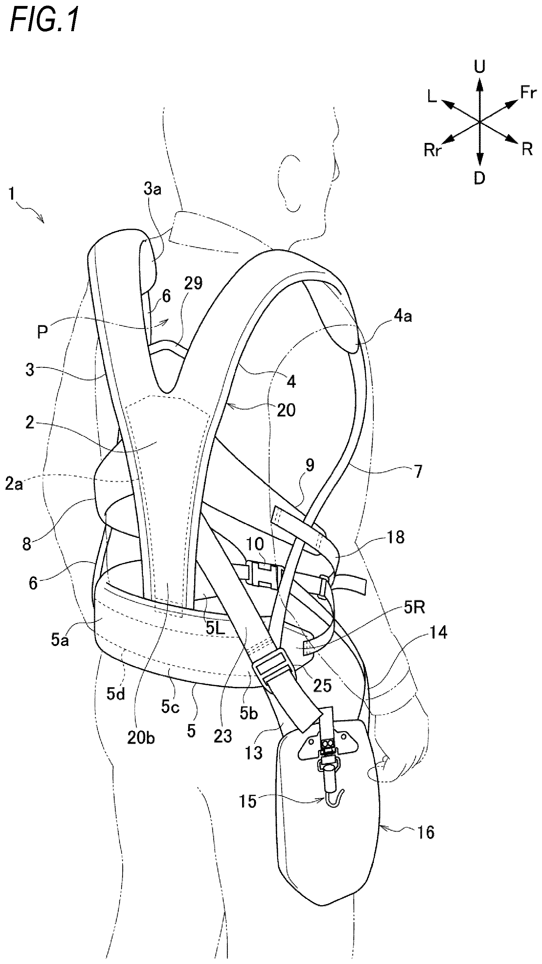

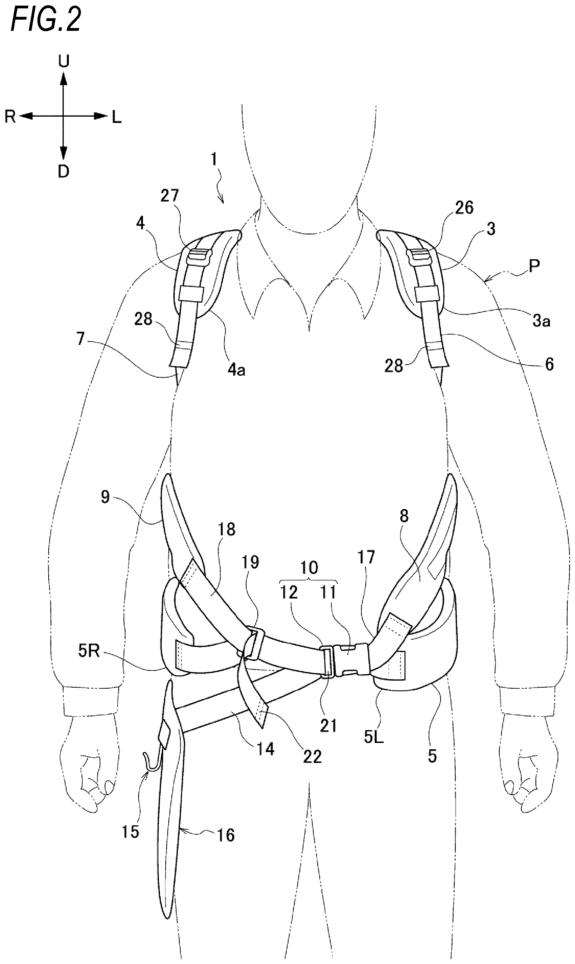

As illustrated in Figs. 1 to 3, a working machine support belt 1 of the embodiment includes: a back plate portion 2; a left shoulder belt 3 and a right shoulder belt 4 that extend upward from an upper portion of the back plate portion 2 and turn to a front part of an operator P; a waist belt 5 that extends from a lower portion of the back plate portion 2 to both sides; a left suspender band 6 that connects a front lower portion 3a of the left shoulder belt 3 and a left rear portion 5a of the waist belt 5; a right suspender band 7 that connects a front lower portion 4a of the right shoulder belt 4 and the right rear portion 5b of the waist belt 5; a left side belt 8 that extends left-downward from the upper portion of the back plate portion 2, turns to the front part of the operator P, and is connected to a left end portion 5L of the waist belt 5; a right side belt 9 that extends right-downward from the upper portion of the back plate portion 2, turns to the front part of the operator P, and is connected to a right end portion 5R of the waist belt 5; a locking member 10 that locks the left end portion 5L of the waist belt 5 and the left side belt 8 which are connected to each other, and the right end portion 5R of the waist belt 5 and the right side belt 9 which are connected to each other; and a working machine pad 16 supported by the right rear portion 5b of the waist belt 5 via a rear support band 13, supported by the right end portion 5R of the waist belt 5 and the right side belt 9 which are connected to each other via a front support band 14, and provided with a hook 15 that supports a working machine (not illustrated). The back plate portion 2, the left shoulder belt 3, the right shoulder belt 4, the waist belt 5, the left side belt 8, and the right side belt 9 are made of cushion materials (not illustrated).

According to the above-described configuration, a load on the working machine can be distributed to an upper body of an operator P by the back plate portion 2, the left shoulder belt 3 and the left suspender band 6, the right shoulder belt 4 and the right suspender band 7, the left side belt 8, the right side belt 9, and the waist belt 5. Further, in the working machine support belt 1, by providing the left side belt 8 and the right side belt 9 and by locking the left end portion 5L of the waist belt 5 and the left side belt 8 which are connected to each other and the right end portion 5R of the waist belt 5 and the right side belt 9 which are connected to each other by the locking member 10, the load on the working machine can be distributed to the entire waist of the operator P, and thus, the deviation of the load that acts on the waist is reduced, and fatigue due to a local load on the body of the operator can be reduced. Further, since the back plate portion 2, the left shoulder belt 3, the right shoulder belt 4, the waist belt 5, the left side belt 8, and the right side belt 9 are made of cushion materials, the load on the operator P can further be provided.

The left shoulder belt 3 and the right shoulder belt 4 are formed integrally with the back plate portion 2 and configure a substantially Y-shaped belt main body 20. A lower end portion 20b of the belt main body 20 is connected to a center portion 5c of the waist belt 5. The back plate portion 2 and the waist belt 5 include reinforcing members 2a and 5d made of a hard resin member inside. According to the configuration, appropriate elasticity and rigidity can be imparted to the back plate portion 2 and the waist belt 5. Further, by using a hard resin member as the reinforcing member, it is possible to manufacture the working machine support belt 1 with a lighter weight and at a lower cost compared to a case where a metal is used for the reinforcing member.

The locking member 10 of the waist belt 5 is a side release type one-touch buckle, and includes a female member 11 as a left locking portion and a male member 12 as a right locking portion. In other words, the locking member 10 is configured such that a pair of locking pieces of the male member 12 is locked to a pair of locking recessed portions of the female member 11 by inserting the male member 12 into the female member 11, and the pair of locking pieces is disengaged from the pair of locking recessed portions by pushing the pair of locking pieces with a finger.

In addition, the working machine support belt 1 includes a reinforcing band 23 that connects the back plate portion 2 and the right rear portion 5b of the waist belt 5. The reinforcing band 23 is connected to the back plate portion 2 between a connection portion between the back plate portion 2 and the right side belt 9, and a connection portion between the back plate portion 2 and the waist belt portion 5.

The left end portion 5L of the waist belt 5 and the left side belt 8 are connected to each other via a left connecting band 17. The right end portion 5R of the waist belt 5 and the right side belt 9 are connected to each other via a right connecting band 18. The left connecting band 17 is provided with the female member 11 of the locking member 10, and the front support band 14 is connected to the right connecting band 18 via a first length adjusting mechanism 19. The male member 12 of the locking member 10 is connected to the front support band 14 via a second length adjusting mechanism 21.

The right rear portion 5b of the waist belt 5 is provided with a third length adjusting mechanism 25, and the rear support band 13 is connected to the third length adjusting mechanism 25. The first length adjusting mechanism 19, the second length adjusting mechanism 21, and the third length adjusting mechanism 25 are ladder locks, for example. In this manner, since the front support band 14 is connected to the right connecting band 18 via the first length adjusting mechanism 19, by adjusting the length of the front support band 14, the length around the waist in the working machine support belt 1 can be adjusted.

Further, by changing a distance between the second length adjusting mechanism 21 and the working machine pad 16 in the front support band 14 and a distance between the third length adjusting mechanism 25 and the working machine pad 16 in the rear support band 13, the position of the hook 15 (working machine pad 16) can be adjusted freely. In other words, by elongating both the distance between the second length adjusting mechanism 21 and the working machine pad 16 in the front support band 14 and the distance between the third length adjusting mechanism 25 and the working machine pad 16 in the rear support band 13, the position of the hook 15 can be lowered, and by shortening both the distance between the second length adjusting mechanism 21 and the working machine pad 16 in the front support band 14 and the distance between the third length adjusting mechanism 25 and the working machine pad 16 in the rear support band 13, the position of the hook 15 can be raised. Furthermore, by shortening the distance between the second length adjusting mechanism 21 and the working machine pad 16 in the front support band 14 and by elongating the distance between the third length adjusting mechanism 25 and the working machine pad 16 in the rear support band 13, the hook 15 can be moved forward, and by elongating the distance between the second length adjusting mechanism 21 and the working machine pad 16 in the front support band 14 and by shortening the distance between the third length adjusting mechanism 25 and the working machine pad 16 in the rear support band 13, the hook 15 can be moved rearward.

Length adjusting mechanisms 26 and 27 are provided in the front lower portions 3a and 4a of the left shoulder belt 3 and the right shoulder belt 4, respectively. The left suspender band 6 is connected to the front lower portion 3a of the left shoulder belt 3 via the length adjusting mechanism 26, and the right suspender band 7 is connected to the front lower portion 4a of the right shoulder belt 4 via the length adjusting mechanism 27. According to the configuration, by adjusting the length of the left suspender band 6 using the length adjusting mechanism 26 of the left shoulder belt 3, and by adjusting the length of the right suspender band 7 using the length adjusting mechanism 27 of the right shoulder belt 4, the position of the waist belt 5 can be adjusted in accordance with the operator P. In addition, the length adjusting mechanisms 26 and 27 are ladder locks, for example.

In the left suspender band 6, a base end portion 6a is stitched to the left rear portion 5a of the waist belt 5, and a tip end portion 6b side extends from the front lower portion 3a of the left shoulder belt 3 via the length adjusting mechanism 26. In the right suspender band 7, a base end portion 7a is stitched to the right rear portion 5b of the waist belt 5, and a tip end portion 7b side extends from the front lower portion 4a of the right shoulder belt 4 via the length adjusting mechanism 27. The right suspender band 7, the rear support band 13, and the reinforcing band 23 are gathered and stitched to the right rear portion 5b of the waist belt 5 to make the stitching work and the like easy.

A left through hole 8a into which the left suspender band 6 is inserted is provided in the left side belt 8, and a right through hole 9a into which the right suspender band 7 is inserted is provided in the right side belt 9. The left through hole 8a is formed by stitching both end portions of the band member 24 to the left side belt 8. The right through hole 9a is formed by stitching one end portion 18a and a middle portion 18c of the right connecting band 18 to the right side belt 9. In this manner, by making the left suspender band 6 inserted into the left through hole 8a provided in the left side belt 8, and by making the right suspender band 7 inserted into the right through hole 9a provided in the right side belt 9, the left suspender band 6 and the right suspender band 7 can be guided to a desired position, and thus, the integrity of the working machine support belt 1 can be improved, and the load on the working machine can be appropriately distributed to the upper body of the operator P. In addition, since the right through hole 9a of the right side belt 9 into which the right suspender band 7 is inserted is configured with a part of the right connecting band 18, the number of components can be reduced.

In the front support band 14, a first end portion 14a is stitched and connected to the working machine pad 16, and a second end portion 14b side extends via the second length adjusting mechanism 21 and the first length adjusting mechanism 19. A clip 22 is provided in the second end portion 14b of the front support band 14 that serves as a free end. In this manner, since the clip 22 is provided in the second end portion 14b of the front support band 14, flapping of the front support band 14 can be prevented by sandwiching the clip 22 by the right side belt 9 and the like.

Clips 28 are provided in the tip end portions 6b and 7b of the left suspender band 6 and the right suspender band 7, respectively. According to the configuration, flapping of the left suspender band 6 and the right suspender band 7 can be prevented by sandwiching each clip 28 between the left suspender band 6, the right suspender band 7 and the like.

In addition, the working machine support belt 1 includes a loop band 29 that connects the left shoulder belt 3 and the right shoulder belt 4 to each other above the back plate portion 2. According to the configuration, the working machine support belt 1 can be hooked using the loop band 29 when not in use.

### [Working Machine Pad and Supporting Structure Thereof]

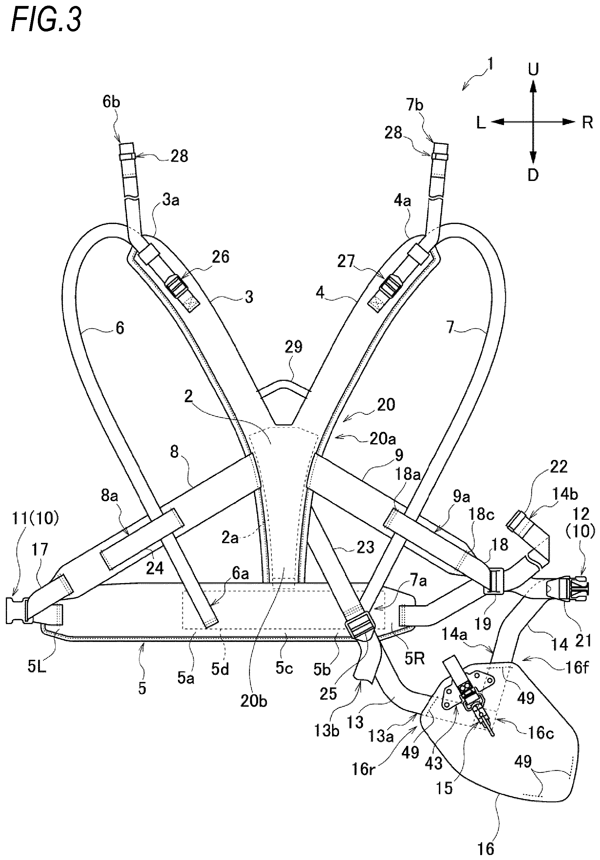

As illustrated in Fig. 3, in the front support band 14, the first end portion 14a positioned on one side with respect to the second length adjusting mechanism is stitched and connected to the working machine pad 16, and the second end portion 14b positioned on the other side with respect to the second length adjusting mechanism 21 is connected to the first length adjusting mechanism. According to the configuration, by changing the distance between the first length adjusting mechanism 19 and the second length adjusting mechanism 21 in the front support band 14, the position around the waist of the working machine pad 16 can be adjusted.

In addition, in the rear support band 13, a first end portion 13a is stitched and connected to the working machine pad 16, and a second end portion 13b positioned to be opposite to the first end portion 13a is connected to the right rear portion 5b of the waist belt 5 via the third length adjusting mechanism 25. Therefore, as described above, by changing the distance between the second length adjusting mechanism 21 and the working machine pad 16 in the front support band 14 and the distance between the third length adjusting mechanism 25 and the working machine pad 16 in the rear support band 13, the position of the hook 15 (working machine pad 16) can be adjusted freely.

Further, the rear support band 13 is disposed substantially linearly with the reinforcing band 23. In this manner, since the reinforcing band 23 that connects the back plate portion 2 and the right rear portion 5b of the waist belt 5 is disposed substantially linearly with respect to the rear support band 13, the load on the working machine applied to the rear support band 13 can be appropriately received by the reinforcing band 23.

In addition, the female member (left locking portion) 11 of the waist belt 5 is provided on the left connecting band 17, and the first length adjusting mechanism 19 is provided on the right connecting band 18. According to the configuration, the working machine pad 16 can be more stably supported by the left side belt 8 and the right side belt 9 that extend from the upper portion of the back plate portion 2. In addition, manufacturing cost can be reduced by making the first length adjusting mechanism 19, the second length adjusting mechanism 21, and the third length adjusting mechanism 25 into a highly versatile ladder lock.

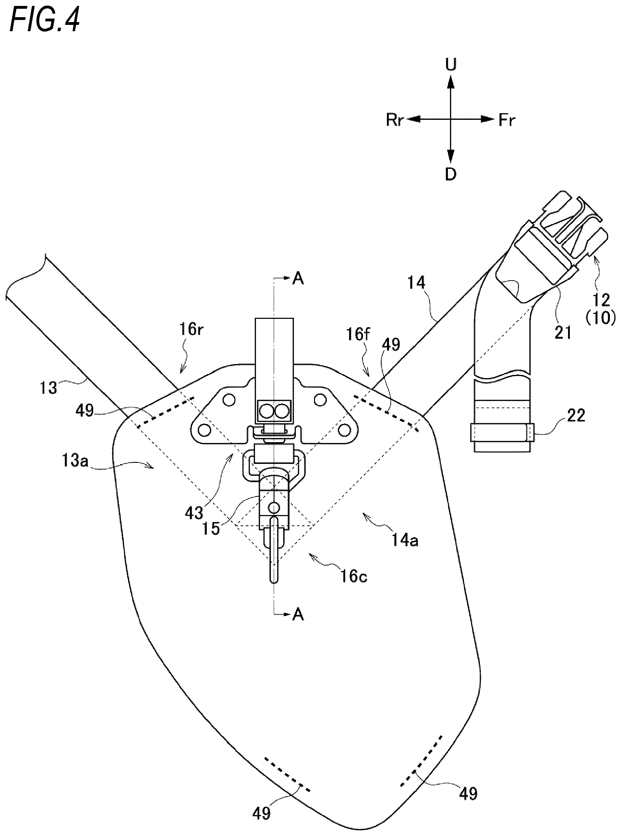

As illustrated in Fig. 4, the first end portion 14a of the front support band 14 is stitched to the upper end portion of a front portion 16f of the working machine pad 16 and is stitched to a center portion 16c of the working machine pad 16. The first end portion 13a of the rear support band 13 is stitched to the upper end portion of a rear portion 16r of the working machine pad 16 and is stitched at the center portion 16c of the working machine pad 16. In this manner, by stitching the first end portion 14a of the front support band 14 and the first end portion 13a of the rear support band 13 at the center portion 16c of the working machine pad 16, stitching work can be performed easily.

Here, the front support band 14 and the rear support band 13 may be configured separately, or may be configured with a single band member. In a case where the front support band 14 and the rear support band 13 are configured with a single band member, the band member is folded back at the center portion 16c of the working machine pad 16. By configuring the front support band 14 and the rear support band 13 with a single band member, the number of components can be reduced.

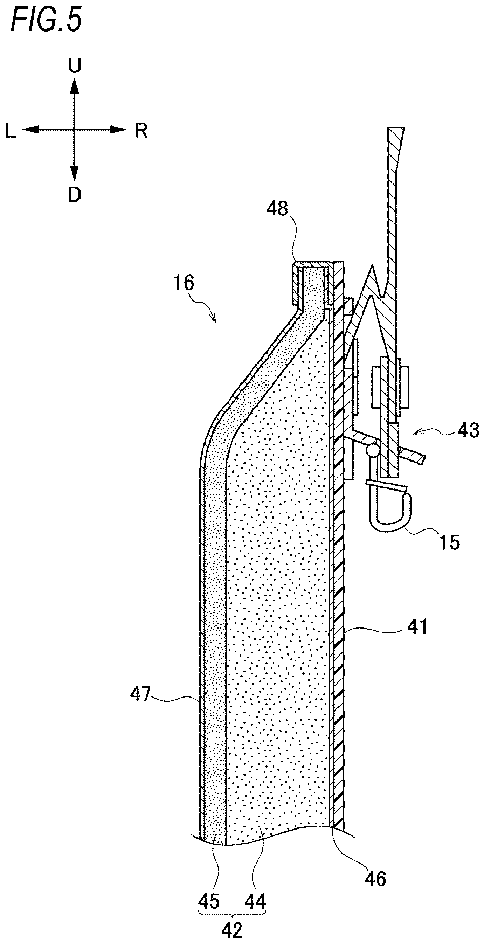

As illustrated in Fig. 5, the working machine pad 16 includes a plate portion 41 disposed on the working machine side and a cushion portion 42 disposed on the operator P side and softer than the plate portion 41, and the hook 15 is attached to an outer surface of the plate portion 41 via a fixing metal fitting 43. In this manner, since the working machine 16 includes the hard plate portion 41 positioned on the working machine side and the soft cushion portion 42 positioned on the operator P side, the load or vibration on the working machine can be received by the plate portion 41, and the cushion portion 42 can protect the thigh of the operator P. In other words, since the cushion portion 42 is made of a cushion material and deforms along the shape of the thigh while reducing the load or vibration on the working machine, the load on the operator P can be reduced.

The cushion portion 42 includes a soft cushion portion 44 and a hard cushion portion 45 that is harder than the soft cushion portion 44, and the soft cushion portion 44 is disposed between the plate portion 41 and the hard cushion portion 45. In addition, the cushion portion 42 and the plate portion 41 are integrated by stitching the circumferential edge portions of the hard cushion portion 45 and the plate portion 41 at a plurality of locations. The plate portion 41 is made of resin, and the soft cushion portion 44 and the hard cushion portion 45 are made of sponge. In this manner, the cushion portion 42 has a two-layer structure of the soft cushion portion 44 and the hard cushion portion 45, and thus, the soft cushion portion 44 can absorb the vibration on the working machine and the hard cushion portion 45 can improve followability to the working machine. In addition, it is possible to satisfy both the vibration absorption performance and followability which are the characteristics which conflict with each other. Further, weight reduction and low cost can be realized by making the plate portion 41 with resin and making the soft cushion portion 44 and the hard cushion portion 45 with sponge.

The cushion portion 42 includes a first covering member 46 that covers the outer surface of the soft cushion portion 44, and a second covering member 47 that covers the outer surface of the hard cushion portion 45. With this configuration, deterioration of the soft cushion portion 44 and the hard cushion portion 45 is suppressed.

In addition, the cushion portion 42 includes a third covering member 48 having a substantially U-shaped section and interposing the outer edge portions of the hard cushion portion 45, the first covering member 46, and the second covering member 47, and the hard cushion portion 45, the first covering member 46, the second covering member 47, and the third covering member 48 are stitched to each other over the entire circumference. In this manner, by interposing the outer edge portions of the hard cushion portion 45, the first covering member 46, and the second covering member 47 with the third covering member 48, and by stitching the members over the entire circumference, the strength of the end portion of the hard cushion portion 45 can be improved, and the durability of the working machine pad 16 can be improved.

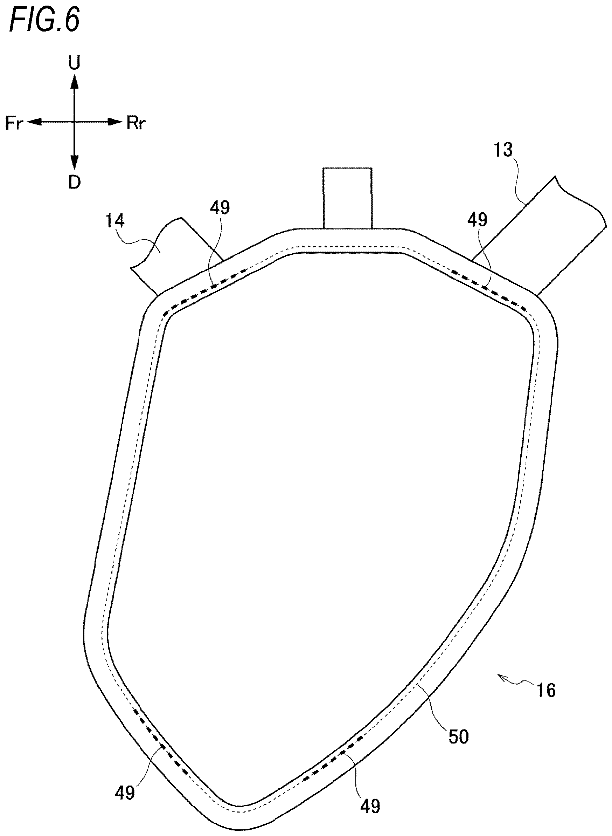

As illustrated in Fig. 6, a stitching portion 49 of the hard cushion portion 45 and the plate portion 41 is substantially at the same position as a stitching portion 50 of the hard cushion portion 45, the first covering member 46, the second covering member 47, and the third covering member 48. In this manner, by making the positions of both the stitching portions 49 and 50 the same, it is possible to suppress the deterioration of the design of the working machine pad 16 by forming the stitching portions 49 and 50.

As illustrated in Figs. 4 and 6, the stitching portions 49 of the hard cushion portion 45 and the plate portion 41 are provided at two locations on the upper and lower portions of the working machine pad 16. In this manner, by avoiding the center portion 16c of the working machine pad 16 that comes into contact with the working machine and disposing the stitching portion 49 only on the circumferential edge portion of the working machine pad 16, the deterioration of the stitching portion 49 due to contact with the working machine can be suppressed. In other words, since there is a low possibility that the working machine comes into contact with the stitching portion 49 in relation to the position of the hook 15, the deterioration of the stitching portion 49 can be suppressed.

In the example, the front support band 14 and the rear support band 13 are stitched to the upper two stitching portions 49 among four stitching portions 49 of the hard cushion portion 45 and the plate portion 41. In this manner, by stitching the front support band 14 and the rear support band 13 in the stitching portion 49 between the plate portion 41 and the cushion portion 42, the deterioration of the design of the working machine pad 16 can be suppressed by forming the stitching portion between the front support band 14 and the rear support band 13.

### [Action]

In the working machine support belt 1 configured as described above, the load on the working machine can be distributed to the upper body of the operator P by the back plate portion 2, the left shoulder belt 3 and the left suspender band 6, the right shoulder belt 4 and the right suspender band 7, the left side belt 8, the right side belt 9, and the waist belt 5. Further, in the working machine support belt 1, by providing the right belt portion 9 in addition to the left side belt 8 and by locking the left end portion 5L of the waist belt 5 and the left side belt 8 which are connected to each other and the right end portion 5R of the waist belt 5 and the right side belt 9 which are connected to each other by the locking member 10, the load on the working machine can be distributed to the entire waist of the operator P, and thus, the deviation of the load that acts on the waist portion is reduced, and fatigue due to a local load on the body of the operator can be reduced.

Further, since the working machine support belt 1 is provided with the second length adjusting mechanism 21 in the front support band 14 and the third length adjusting mechanism 25 is provided in the rear support band 13, by appropriately adjusting the members, the vertical and horizontal positions of the hook 15 (working machine pad 16) can be freely adjusted. Furthermore, the working machine support belt 1 is provided with the first length adjusting mechanism 19 on the front support band 14 and the length adjusting mechanisms 26 and 27 are provided on the left suspender band 6 and the right suspender band 7, by adjusting the members in accordance with the physique of the person P, it is possible to adjust fitting feeling of the working machine support belt 1. For example, during heavy load work, the working machine support belt 1 is fitted tightly, and thus, a suspension load on a lawn mowing machine or a reaction force that accompanies to a lawn mowing work can be effectively distributed. Even during light work, work fatigue can be reduced by fitting the working machine support belt 1 appropriately.

In addition, the working machine support belt 1 may be applied to a two-hand handle type mowing machine with a U-shaped handle, and may be applied to a loop handle type mowing machine in which the loop handle is held by one hand and a bar of the working machine is held by the other hand. Further, the working machine support belt 1 can be used for the working machine, such as a blower, a high-pressure washing machine, and a sprayer, in addition to a mowing machine.

In addition, the above-described embodiment can be appropriately modified, improved, and the like. For example, in the above-described embodiment, a ladder lock is used as the length adjusting mechanism, but a mechanism other than the ladder lock may be used.

The present specification describes at least the following contents. In addition, in a parenthesis, the corresponding configuration elements and the like in the above-described embodiment are illustrated, but the invention is not limited thereto.
(1) A working machine pad (working machine pad 16) supporting structure provided in a working machine support belt (working machine support belt 1), including: a front support band (front support band 14) that supports a front portion (front portion 16f) of the working machine pad; and a rear support band (rear support band 13) that supports a rear portion (rear portion 16r) of the working machine pad, in which the front support band is provided with a front length adjusting mechanism (second length adjusting mechanism 21), and in which the rear support band is provided with a rear length adjusting mechanism (third length adjusting mechanism 25).
   According to (1), by changing a distance between the front length adjusting mechanism and the working machine pad in the front support band, and a distance between the rear length adjusting mechanism and the working machine pad in the rear support band, the position of the working machine pad can be freely adjusted in the front-rear and left-right directions.
(2) The working machine pad supporting structure according to (1), in which the working machine support belt includes a waist belt (waist belt 5), in which the rear support band is directly or indirectly connected to a right rear portion (right rear portion 5b) of the waist belt, in which a left locking portion (female member 11) is directly or indirectly connected to a left end portion (left end portion 5L) of the waist belt, in which a first length adjusting mechanism (first length adjusting mechanism 19) is directly or indirectly provided in a right end portion (right end portion 5R) of the waist belt, in which a right locking portion (male member 12) engaged with the left locking portion is connected to the front support band via the front length adjusting mechanism, in which, in the front support band, a first end portion (first end portion 14a) positioned on one side with respect to the front length adjusting mechanism is connected to the working machine pad, and a second end portion (second end portion 14b) positioned on the other side with respect to the front length adjusting mechanism is connected to the first length adjusting mechanism, and in which, in the rear support band, a first end portion (first end portion 13a) is connected to the working machine pad, and a second end portion (second end portion 13b) positioned to be opposite to the first end portion is connected to the right end portion of the waist belt via the rear length adjusting mechanism (third length adjusting mechanism 25).
   According to (2), by changing the distance between the first length adjusting mechanism and the front length adjusting mechanism in the front support band, the position around the waist of the working machine pad can be adjusted.
(3) The working machine pad supporting structure according to (2), in which the working machine support belt includes a back plate portion (back plate portion 2), a left side belt (left side belt 8) that extends left-downward from an upper portion of the back plate portion, turns forward, and is connected to the left end portion of the waist belt via a left connecting band (left connecting band 17), and a right side belt (right side belt 9) that extends right-downward from the upper portion of the back plate portion, turns forward, and is connected to the right end portion of the waist belt via a right connecting band (right connecting band 18), in which the waist belt extends to both sides from a lower portion of the back plate portion, in which the left locking portion is provided in the left connecting band, and in which the first length adjusting mechanism is provided in the right connecting band.
   According to (3), the working machine pad can be more stably supported by the left side belt and the right side belt that extend from the upper portion of the back plate portion.
(4) The working machine support belt according to (3), in which the working machine support belt further includes a reinforcing band (reinforcing band 23) that connects the back plate portion and the right rear portion of the waist belt, and in which the reinforcing band and the rear support band are disposed substantially linearly.
   According to (4), since the reinforcing band that connects the back plate portion and the right rear portion of the waist belt is disposed substantially linearly with respect to the rear support band, the load on the working machine applied to the rear support band can be appropriately received by the reinforcing band.
(5) The working machine pad supporting structure according to any one of (2) to (4), in which the first end portion of the front support band is stitched to the front portion of the working machine pad, and is stitched at a center portion (center portion 16c) of the working machine pad, and in which the first end portion of the rear support band is stitched to the rear portion of the working machine pad, and is stitched at the center portion of the working machine pad.
   According to (5), by stitching the first end portion of the front support band and the first end portion of the rear support band at the center portion of the working machine pad, stitching work can be performed easily.
(6) The working machine pad supporting structure according to any one of (1) to (5), in which the front support band and the rear support band are configured with a single band member, and in which the single band member is folded back at the center portion of the working machine pad.
   According to (6), since the front support band and the rear support band are configured with a single band member, the number of components can be reduced.
(7) The working machine pad supporting structure according to any one of (1) to (6), in which the working machine pad includes a plate portion (plate portion 41) disposed on the working machine side, and a cushion portion (cushion portion 42) disposed on the working machine side and softer than the plate portion, and in which the front support band and the rear support band are stitched to each other in a stitching portion (stitching portion 49) between the plate portion and the cushion portion.
   According to (7), since the front support band and the rear support band are stitched to each other in the stitching portion between the plate portion and the cushion portion, deterioration of the design can be suppressed.
(8) The working machine pad supporting structure according to any one of (1) to (7), in which the front length adjusting mechanism and the rear length adjusting mechanism are ladder locks.
   According to (8), the manufacturing cost can be reduced by making the front length adjusting mechanism and the rear length adjusting mechanism into a highly versatile ladder lock.
(9) The working machine pad supporting structure according to (3) or (4), in which the working machine support belt includes a left shoulder belt (left shoulder belt 3) and a right shoulder belt (right shoulder belt 4) that extend upward from the upper portion of the back plate and turn forward, a left suspender band (left suspender band 6) that connects a front lower portion (front lower portion 3a) of the left shoulder belt and a left rear portion of the waist belt to each other, and a right suspender band (right suspender band 7) that connects a front lower portion (front lower portion 4a) of the right shoulder belt and a right rear portion of the waist belt to each other.

According to (9), the right suspender band and the rear support band are gathered and connected to the right rear portion of the waist belt to make the stitching work easy.

### DESCRIPTION OF REFERENCE NUMERALS AND SIGNS

1: working machine support belt
2: back plate portion
3: left shoulder belt
3a: front lower portion
4: right shoulder belt
4a: front lower portion
5: waist belt
5b: right rear portion
5L: left end portion
5R: right end portion
6: left suspender band
7: right suspender band
8: left side belt
9: right side belt
11: female member (left locking portion)
12: male member (right locking portion)
13: rear support band
103a: first end portion
103b: second end portion
14: front support band
14a: first end portion
14b: second end portion
16: working machine pad
16c: center portion
16f: front portion
16r: rear portion
17: left connecting band
18: right connecting band
19: first length adjusting mechanism
21: second length adjusting mechanism (front length adjusting mechanism)
23: reinforcing band
25: third length adjusting mechanism (rear length adjusting mechanism)
41: plate portion
42: cushion portion
49: stitching portion

## Claims

1. A working machine support belt (1) comprising a working machine pad (16) supporting structure, the working machine pad (16) supporting structure comprising:
a front support band (14) that supports a front portion (16f) of the working machine pad (16); and
a rear support band (13) that supports a rear portion (16r) of the working machine pad (16),
wherein the front support band (14) is provided with a front length adjusting mechanism (21),
wherein the rear support band (13) is provided with a rear length adjusting mechanism (25),
wherein the working machine support belt (1) includes a waist belt (5);
wherein the rear support band (13) is directly or indirectly connected to a right rear portion (5b) of the waist belt (5); and
wherein a left locking portion (11) is directly or indirectly connected to a left end portion (5L) of the waist belt (5);
**characterized in that**
a first length adjusting mechanism (19) is directly or indirectly provided in a right end portion (5R) of the waist belt (5);
a right locking portion (12) engaged with the left locking portion (11) is connected to the front support band (14) via the front length adjusting mechanism (21);
in the front support band (14), a first end portion (14a) positioned on one side with respect to the front length adjusting mechanism (21) is connected to the working machine pad (16), and a second end portion (14b) positioned on the other side with respect to the front length adjusting mechanism (21) is connected to the first length adjusting mechanism (19); and
in the rear support band (13), a first end portion (13a) is connected to the working machine pad (16), and a second end portion (13b) positioned to be opposite to the first end portion (13a) is connected to the right end portion (5R) of the waist belt (5) via the rear length adjusting mechanism (25).

2. The working machine support belt (1) according to claim 1,
wherein the working machine support belt (1) further includes:
a back plate portion (2);
a left side belt (8) that extends left-downward from an upper portion of the back plate portion (2), turns forward, and is connected to the left end portion (5L) of the waist belt (5) via a left connecting band (17); and
a right side belt (9) that extends right-downward from the upper portion of the back plate portion (2), turns forward, and is connected to the right end portion (5R) of the waist belt (5) via a right connecting band (18);
wherein the waist belt (5) extends to both sides from a lower portion of the back plate portion (2);
wherein the left locking portion (11) is provided in the left connecting band (17); and
wherein the first length adjusting mechanism (19) is provided in the right connecting band (18).

3. The working machine support belt (1) according to claim 2, wherein:
the working machine support belt (1) further includes a reinforcing band (23) that connects the back plate portion (2) and the right rear portion (5b) of the waist belt (5); and
the reinforcing band (23) and the rear support band (13) are disposed substantially linearly.

4. The working machine support belt (1) according to any one of claims 1 to 3, wherein:
the first end portion (14a) of the front support band (14) is stitched to the front portion (16f) of the working machine pad (16), and is stitched at a center portion of the working machine pad (16); and
the first end portion (13a) of the rear support band (13) is stitched to the rear portion (16r) of the working machine pad (16), and is stitched at the center portion (16c) of the working machine pad (16).

5. The working machine support belt (1) according to any one of claims 1 to 4, wherein:
the front support band (14) and the rear support band (13) are configured with a single band member; and
the single band member is folded back at the center portion (16c) of the working machine pad (16).

6. The working machine support belt (1) according to any one of claims 1 to 5,
wherein the working machine pad (16) includes:
a plate portion (41) disposed on the working machine side; and
a cushion portion (42) disposed on the working machine side and softer than the plate portion; and
wherein the front support band (14) and the rear support band (13) are stitched to each other in a stitching portion (49) between the plate portion (41) and the cushion portion (42).

7. The working machine support belt (1) according to any one of claims 1 to 6, wherein
the front length adjusting mechanism (21) and the rear length adjusting mechanism (25) are ladder locks.

8. The working machine support belt (1) according to claim 2 or 3, wherein the working machine support belt (1) further includes:
a left shoulder belt (3) and a right shoulder belt (4) that extend upward from the upper portion of the back plate (2) and turn forward;
a left suspender band (6) that connects a front lower portion (3a) of the left shoulder belt (3) and a left rear portion (5a) of the waist belt (5) to each other; and
a right suspender band (7) that connects a front lower portion (4a) of the right shoulder belt (4) and the right rear portion (5b) of the waist belt (5) to each other.

## Patentansprüche

1. Tragegurt (1) für eine Arbeitsmaschine, der eine Stützstruktur für ein Arbeitsmaschinenpolster (16) aufweist, wobei die Stützstruktur für das Arbeitsmaschinenpolster (16) Folgendes umfasst:
ein vorderes Stützband (14), das einen vorderen Abschnitt (16f) des Arbeitsmaschinenpolsters (16) stützt; und
ein hinteres Stützband (13), das einen hinteren Abschnitt (16r) des Arbeitsmaschinenpolsters (16) stützt,
wobei das vordere Stützband (14) mit einem vorderen Längenverstellmechanismus (21) versehen ist,
wobei das hintere Stützband (13) mit einem hinteren Längenverstellmechanismus (25) versehen ist,
wobei der Tragegurt (1) der Arbeitsmaschine einen Hüftgurt (5) umfasst;
wobei das hintere Stützband (13) direkt oder indirekt mit einem rechten hinteren Abschnitt (5b) des Hüftgurts (5) verbunden ist; und
wobei ein linker Verriegelungsabschnitt (11) direkt oder indirekt mit einem linken Endabschnitt (5L) des Hüftgurts (5) verbunden ist;
**dadurch gekennzeichnet, dass**
ein erster Längenverstellmechanismus (19) direkt oder indirekt in einem rechten Endabschnitt (5R) des Hüftgurts (5) vorgesehen ist;
ein rechter Verriegelungsabschnitt (12), der mit dem linken Verriegelungsabschnitt (11) in Eingriff steht, über den vorderen Längenverstellmechanismus (21) mit dem vorderen Stützband (14) verbunden ist;
in dem vorderen Stützband (14) ein erster Endabschnitt (14a), der in Bezug auf den vorderen Längenverstellmechanismus (21) auf einer Seite positioniert ist, mit dem Arbeitsmaschinenpolster (16) verbunden ist, und ein zweiter Endabschnitt (14b), der in Bezug auf den vorderen Längeneinstellmechanismus (21) auf der anderen Seite positioniert ist, mit dem ersten Längenverstellmechanismus (19) verbunden ist; und
in dem hinteren Stützband (13) ein erster Endabschnitt (13a) mit dem Arbeitsmaschinenpolster (16) verbunden ist, und ein zweiter Endabschnitt (13b), der so positioniert ist, dass er dem ersten Endabschnitt (13a) gegenüberliegt, mit dem rechten Endabschnitt (5R) des Hüftgurts (5) über den hinteren Längenverstellmechanismus (25) verbunden ist.

2. Tragegurt (1) für eine Arbeitsmaschine nach Anspruch 1,
wobei der Tragegurt (1) für eine Arbeitsmaschine ferner aufweist:
einen Rückenplattenabschnitt (2);
einen linken Seitengurt (8), der sich von einem oberen Abschnitt des Rückenplattenabschnitts (2) nach links unten erstreckt, sich nach vorne dreht und mit dem linken Endabschnitt (5L) des Hüftgurts (5) über ein linkes Verbindungsband (17) verbunden ist; und
einen rechten Seitengurt (9), der sich von dem oberen Abschnitt des Rückenplattenabschnitts (2) nach rechts unten erstreckt, sich nach vorne dreht und mit dem rechten Endabschnitt (5R) des Hüftgurts (5) über ein rechtes Verbindungsband (18) verbunden ist;
wobei sich der Hüftgurt (5) zu beiden Seiten von einem unteren Abschnitt des Rückenplattenabschnitts (2) erstreckt;
wobei der linke Verriegelungsabschnitt (11) in dem linken Verbindungsband (17) vorgesehen ist; und
wobei der erste Längenverstellmechanismus (19) in dem rechten Verbindungsband (18) vorgesehen ist.

3. Tragegurt (1) für eine Arbeitsmaschine nach Anspruch 2, wobei der Tragegurt (1) für eine Arbeitsmaschine ferner aufweist:
ein Verstärkungsband (23), das den Rückenplattenabschnitt (2) und den rechten hinteren Abschnitt (5b) des Hüftgurts (5) verbindet; und wobei das Verstärkungsband (23) und das hintere Stützband (13) im Wesentlichen linear angeordnet sind.

4. Tragegurt (1) für eine Arbeitsmaschine nach einem der Ansprüche 1 bis 3, wobei:
der erste Endabschnitt (14a) des vorderen Stützbandes (14) an den vorderen Abschnitt (16f) und an einen mittleren Abschnitt des Arbeitsmaschinenpolsters (16) genäht ist; und
der erste Endabschnitt (13a) des hinteren Stützbandes (13) an den hinteren Abschnitt (16r) und an den mittleren Abschnitt (16c) des Arbeitsmaschinenpolsters (16) genäht ist.

5. Tragegurt (1) für eine Arbeitsmaschine nach einem der Ansprüche 1 bis 4,
wobei
das vordere Stützband (14) und das hintere Stützband (13) in Form eines einzigen Bandelementes ausgebildet sind; und
das einzige Bandelement am Mittelabschnitt (16c) des Arbeitsmaschinenpolsters (16) zurückgefaltet ist.

6. Tragegurt (1) für eine Arbeitsmaschine nach einem der Ansprüche 1 bis 5,
wobei das Arbeitsmaschinenpolster (16) aufweist
einen Plattenabschnitt (41), der auf der Arbeitsmaschinenseite angeordnet ist; und
einen Polsterabschnitt (42), der auf der Arbeitsmaschinenseite angeordnet ist und weicher ist als der Plattenabschnitt; und
wobei das vordere Stützband (14) und das hintere Stützband (13) in einem Nahtabschnitt (49) zwischen dem Plattenabschnitt (41) und dem Polsterabschnitt (42) miteinander vernäht sind.

7. Tragegurt (1) für eine Arbeitsmaschine nach einem der Ansprüche 1 bis 6,
wobei
der vordere Längenverstellmechanismus (21) und der hintere Längenverstellmechanismus (25) Leitersperren darstellen.

8. Tragegurt (1) für eine Arbeitsmaschine nach Anspruch 2 oder 3, ferner aufweisend:
einen linken Schultergurt (3) und einen rechten Schultergurt (4), die sich von dem oberen Abschnitt der Rückenplatte (2) nach oben erstrecken sich und nach vorne drehen;
ein linkes Trägerband (6), das einen vorderen unteren Abschnitt (3a) des linken Schultergurts (3) und einen linken hinteren Abschnitt (5a) des Hüftgurts (5) miteinander verbindet; und
ein rechtes Trägerband (7), das einen vorderen unteren Abschnitt (4a) des rechten Schultergurts (4) und den rechten hinteren Abschnitt (5b) des Hüftgurts (5) miteinander verbindet.

## Revendications

1. Sangle de support de machine de travail (1) comprenant une structure de support de bloc amortisseur de machine de travail (16), la structure de support de bloc amortisseur de machine de travail (16) comprenant :
une bande de support avant (14) qui supporte une portion avant (16f) du bloc amortisseur de machine de travail (16) ; et
une bande de support arrière (13) qui supporte une portion arrière (16r) du bloc amortisseur de machine de travail (16),
dans laquelle la bande de support avant (14) est pourvue d'un mécanisme de réglage de longueur avant (21),
dans laquelle la bande de support arrière (13) est pourvue d'un mécanisme de réglage de longueur arrière (25),
dans laquelle la sangle de support de machine de travail (1) comporte une sangle à la taille (5) ;
dans laquelle la bande de support arrière (13) est raccordée directement ou indirectement à une portion arrière droite (5b) de la sangle à la taille (5) ; et
dans laquelle une portion de blocage gauche (11) est raccordée directement ou indirectement à une portion d'extrémité gauche (5L) de la sangle à la taille (5) ;
**caractérisée en ce que**
un premier mécanisme de réglage de longueur (19) est fourni directement ou indirectement dans une portion d'extrémité droite (5R) de la sangle à la taille (5) ;
une portion de blocage droite (12) engagée avec la portion de blocage gauche (11) est raccordée à la bande de support avant (14) via le mécanisme de réglage de longueur avant (21) ;
dans la bande de support avant (14), une première portion d'extrémité (14a) positionnée sur un côté par rapport au mécanisme de réglage de longueur avant (21) est raccordée au bloc amortisseur de machine de travail (16), et une deuxième portion d'extrémité (14b) positionnée sur l'autre côté par rapport au mécanisme de réglage de longueur avant (21) est raccordée au premier mécanisme de réglage de longueur (19) ; et
dans la bande de support arrière (13), une première portion d'extrémité (13a) est raccordée au bloc amortisseur de machine de travail (16), et une deuxième portion d'extrémité (13b) positionnée pour être opposée à la première portion d'extrémité (13a) est raccordée à la portion d'extrémité droite (5R) de la sangle à la taille (5) via le mécanisme de réglage de longueur arrière (25).

2. Sangle de support de machine de travail (1) selon la revendication 1,
dans laquelle la sangle de support de machine de travail (1) comporte en outre :
une portion de plaque arrière (2) ;
une sangle côté gauche (8) qui s'étend vers le bas à gauche depuis une portion supérieure de la portion de plaque arrière (2), tourne vers l'avant, et est raccordée à la portion d'extrémité gauche (5L) de la sangle à la taille (5) via une bande de raccordement gauche (17) ; et
une sangle côté droit (9) qui s'étend vers le bas à droite depuis la portion supérieure de la portion de plaque arrière (2), tourne vers l'avant, et est raccordée à la portion d'extrémité droite (5R) de la sangle à la taille (5) via une bande de raccordement droite (18) ;
dans laquelle la sangle à la taille (5) s'étend des deux côtés depuis une portion inférieure de la portion de plaque arrière (2) ;
dans laquelle la portion de blocage gauche (11) est prévue dans la bande de raccordement gauche (17) ; et
dans laquelle le premier mécanisme de réglage de longueur (19) est prévu dans la bande de raccordement droite (18).

3. Sangle de support de machine de travail (1) selon la revendication 2, dans laquelle :
la sangle de support de machine de travail (1) comporte en outre une bande de renforcement (23) qui raccorde la portion de plaque arrière (2) et la portion arrière droite (5b) de la sangle à la taille (5) ; et
la bande de renforcement (23) et la bande de support arrière (13) sont disposées de façon sensiblement linéaire.

4. Sangle de support de machine de travail (1) selon l'une quelconque des revendications 1 à 3, dans laquelle :
la première portion d'extrémité (14a) de la bande de support avant (14) est cousue à la portion avant (16f) du bloc amortisseur de machine de travail (16), et est cousue au niveau d'une portion centrale du bloc amortisseur de machine de travail (16) ; et
la première portion d'extrémité (13a) de la bande de support arrière (13) est cousue à la portion arrière (16r) du bloc amortisseur de machine de travail (16), et est cousue au niveau de la portion centrale (16c) du bloc amortisseur de machine de travail (16).

5. Sangle de support de machine de travail (1) selon l'une quelconque des revendications 1 à 4, dans laquelle :
la bande de support avant (14) et la bande de support arrière (13) sont configurées avec un organe bande unique ; et
l'organe bande unique est replié au niveau de la portion centrale (16c) du bloc amortisseur de machine de travail (16).

6. Sangle de support de machine de travail (1) selon l'une quelconque des revendications 1 à 5, dans laquelle le bloc amortisseur de machine de travail (16) comporte :
une portion de plaque (41) disposée sur le côté machine de travail ; et
une portion de coussinet (42) disposée sur le côté machine de travail et plus souple que la portion de plaque ; et
dans laquelle la bande de support avant (14) et la bande de support arrière (13) sont cousues l'une à l'autre dans une portion de couture (49) entre la portion de plaque (41) et la portion de coussinet (42).

7. Sangle de support de machine de travail (1) selon l'une quelconque des revendications 1 à 6, dans laquelle
le mécanisme de réglage de longueur avant (21) et le mécanisme de réglage de longueur arrière (25) sont des doubles barrettes autobloquantes.

8. Sangle de support de machine de travail (1) selon la revendication 2 ou 3, dans laquelle la sangle de support de machine de travail (1) comporte en outre :
une sangle d'épaule gauche (3) et une sangle d'épaule droite (4) qui s'étendent vers le haut depuis la portion supérieure de la plaque arrière (2) et tournent vers l'avant ;
une bande de bretelle gauche (6) qui raccorde une portion inférieure avant (3a) de la sangle d'épaule gauche (3) et une portion arrière gauche (5a) de la sangle à la taille (5) l'une à l'autre ; et
une bande de bretelle droite (7) qui raccorde une portion inférieure avant (4a) de la sangle d'épaule droite (4) et la portion arrière droite (5b) de la sangle à la taille (5) l'une à l'autre.
